# EUROPEAN PATENT APPLICATION

(11) **EP 4 556 188 A1**
(43) Date of publication of application: **21.05.2025**
(21) Application number: 24213007.8
(22) Date of filing: 14.11.2024
(51) Int. Cl.: B28C 5/46, B25J 5/00, B25J 11/00, B28C 5/12, B05B 13/06, B05B 15/625, F25B 19/00, B28C 7/12

(54) **SYSTEM AND PROCESS FOR INTRODUCING A LANCE INTO A CONCRETE MIXING TRUCK**

(30) Priority: 14.11.2023 US 202318389399
(71) Applicant: Airgas, Inc., Radnor, Pennsylvania 19087 (US)
(72) Inventor: BILGER, Stephen, Twinsburg, 44087 (US)
(74) Representative: Air Liquide

(57) **Abstract**

An apparatus for cooling a concrete mixture, including a mobile base, and an arm support assembly (207). The arm support assembly is pivotally attached to the mobile base, and wherein the arm support assembly is configured to fold against the mobile base for transport. An arm assembly (208,208a,208b), wherein the arm assembly is configured to move along the arm support assembly, and wherein the arm assembly is configured to fold against the arm support assembly for transport. A lance assembly (401), wherein the lance assembly is configured to be inserted into a cement mixer, wherein the lance assembly is configured to fold against the arm assembly for transport. A method for cooling a concrete mixture, including positioning the lance and cement truck to enter the opening of a cement truck. Inserting the lance into the cement truck and introducing liquid nitrogen into the concrete mixer and thereby mixing with the cement mixture.

## Description

### Background

In concrete preparation it is often necessary to cool the concrete mix. The structural integrity of concrete is dependent on the temperature at which the concrete is set. In general, the cooler the concrete when poured, the stronger it will be once set. If poured at high temperatures, set concrete will often not meet minimum strength requirements. This is especially true in warm weather climates (e.g., pours done in the summer).

Traditionally, this problem was overcome by cooling the water used in mixing the concrete or by adding ice as a partial replacement for the water. The water was cooled using a refrigeration unit, ice, or a cryogenic liquid which was mixed with the water before mixing the concrete. These methods are costly, time consuming and labor intensive. The extensive equipment and labor required for conventional approaches pose various safety concerns such as back injuries from lifting ice, loss of limbs from operating ice crushers, etc. Further, the use of ice can have a negative impact on the concrete's characteristics, such as the slump measurement.

Another approach is to inject a cryogenic liquid directly into a concrete mixer drum of a truck while it is being mixed in a conventional rotating mixer. However, the injection processes used previously were cumbersome and expensive. Prior injection systems were stationary injectors, which required time-consuming structural adjustments in order meet the requirements of different size mixers. Further, the current injection systems are designed in a manner that increases the potential damage to the truck mixer drum.

Therefore, there is a need for an efficient and economically feasible apparatus and method for cooling concrete.

### Summary

The invention relates to an apparatus for cooling a concrete mixture, including a mobile base, and an arm support assembly. Wherein the arm support assembly is pivotally attached to the mobile base, and wherein the arm support assembly is configured to fold against the mobile base for transport. An arm assembly, wherein the arm assembly is configured to move along the arm support assembly, and wherein the arm assembly is configured to fold against the arm support assembly for transport. A lance assembly, wherein the lance assembly is configured to be inserted into a cement mixer, wherein the lance assembly is configured to move along the arm assembly, and wherein the lance assembly is configured to fold against the arm assembly for transport.

Depending on the case, the invention may include one or more elementary characteristics below:
The apparatus further comprises a breakaway device configured to allow the lance assembly to become disengaged from the arm assembly thereby preventing damage to the apparatus or the cement mixer.

The apparatus comprises a feed hose, a return hose, a diverter valve, and a fluid line, the feed hose and the return hose being fluidically connected to a liquid nitrogen source and a diverter valve, and the fluid line being fluidically connected to the diverter valve and the lance assembly.

The liquid nitrogen source is a mobile liquid nitrogen source.

The apparatus comprises a control cabinet.

The apparatus comprises a battery.

The invention relates to a method for cooling a concrete mixture, including providing an apparatus as described above. Adjusting the apparatus so that the lance is positioned to enter the opening of a cement truck. Positioning the cement truck, having disposed therein a cement mixture that is to be mixed and poured, proximate to the apparatus. Wherein the apparatus is independent of the cement truck. Inserting the lance into the opening of the cement truck and introducing liquid nitrogen into the concrete mixer and thereby mixing with the cement mixture.

In one embodiment, the liquid nitrogen is obtained from a liquid nitrogen from a mobile liquid nitrogen source. In a preferred embodiment, the positioning, inserting, and introducing of liquid nitrogen into the cement mixer are all performed manually.

In another preferred embodiment, the positioning, inserting, and introducing of liquid nitrogen into the cement mixer are all controlled by a control cabinet.

The power required is provided by a battery.

The lance comprises a breakaway device.

The lance assembly, the arm assemblies, and the arm support assembly are folded during transport.

### Brief Description of the Figures

For a further understanding of the nature and objects for the present invention, reference should be made to the following detailed description, taken in conjunction with the accompanying drawings, in which like elements are given the same or analogous reference numbers and wherein:
Figure 1a is a side view of a schematic representation of the basic layout of a trailer that is suitable for use with the present invention.
Figure 1b is a front view of a schematic representation of the basic layout of a trailer that is suitable for use with the present invention.
Figure 2a is a front view of a schematic representation of the basic layout of arm support assembly and arm assembly, in accordance with one embodiment of the present invention.
Figure 2b is a top view of a schematic representation of the basic layout of arm support assembly and arm assembly, in accordance with one embodiment of the present invention.
Figure 2c is a front view of a schematic representation of one aspect of the basic folding process of arm assemblies, in accordance with one embodiment of the present invention.
Figure 2d is a top view of a schematic representation of one aspect of the basic folding process of arm assemblies, in accordance with one embodiment of the present invention.
Figure 2e is a front view of a schematic representation of one aspect of the basic folding process of arm assemblies, in accordance with one embodiment of the present invention.
Figure 2f is a top view of a schematic representation of one aspect of the basic folding process of arm assemblies, in accordance with one embodiment of the present invention.
Figure 3a is a side view of a schematic representation of another aspect of the basic folding process of arm assemblies, in accordance with one embodiment of the present invention.
Figure 3b is a side view of a schematic representation of another aspect of the basic folding process of arm assemblies, in accordance with one embodiment of the present invention.
Figure 4a is a side view of a schematic representation of one aspect of the lance deployment process, in accordance with one embodiment of the present invention.
Figure 4b is a side view of a schematic representation of one aspect of the lance deployment process, in accordance with one embodiment of the present invention.
Figure 4c is a side view of a schematic representation of one aspect of the lance breakaway mechanism, in accordance with one embodiment of the present invention.
Figure 5a is a front view of a schematic representation of one aspect of the lance deployment process, in accordance with one embodiment of the present invention.
Figure 5b is a side view of a schematic representation of one aspect of the lance deployment process, in accordance with one embodiment of the present invention.
Figure 6 is a top view of a schematic representation of the breakaway mechanism, in accordance with one embodiment of the present invention.
Figure 7a is a side view of a schematic representation of the complete basic deployed system, in accordance with one embodiment of the present invention.
Figure 7b is a front view of a schematic representation of the complete basic deployed system, in accordance with one embodiment of the present invention.
Figure 8 is a schematic representation of the complete basic deployed system, in accordance with one embodiment of the present invention.
Figure 9 is a schematic representation of the complete basic deployed system including a separate pump attached to the mounting bed, in accordance with one embodiment of the present invention.
Figure 10a is a side view of a schematic representation of another aspect of the basic folding process of arm assemblies, in accordance with one embodiment of the present invention.
Figure 10b is a side view of a schematic representation of another aspect of the basic folding process of arm assemblies, in accordance with one embodiment of the present invention.
Figure 10c is a side view of a schematic representation of another aspect of the basic folding process of arm assemblies, in accordance with one embodiment of the present invention.

### Element Numbers

101 = mounting bed
102 = wheels
103 = ground support member
104 = arm support base
201 = arm support member
202 = cross beam member
203 = lower arm cross beam member
204 = upper arm cross beam member
205 = arm vertical support member
206 = arm hinging mechanism
207 = arm support assembly (comprising 201 and 202)
208 = arm assembly (comprising 203, 204, and 205)
208a = left arm assembly
208b = right arm assembly
301 = assembly hinging mechanism
401 = lance
402 = lower guide member
403 = upper lifting member
404 = lance mast
405 = ball joint / breakaway mechanism
406 = lance assembly
407 = lance assembly actuator
701 = diverter valve
702 = control cabinet with PLC and battery
703 = feed hose
704 = return hose
705 = fluid line
706 = cryogenic pump
801 = mobile liquid nitrogen supply

### Description of Preferred Embodiments

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present system provides an improved apparatus and a process for injecting a cooling fluid into a concrete mixing container. The system comprises one or more lance device(s) that is(are) movably mounted on to a mobile support structure. The lance device includes at least two articulated arms and associated means that act on the articulated arms. With the means that acts on the articulated arms of the lance device, it is possible to control both the angle as well as insertion and retraction movement of the rigid lance with regard to the concrete mixing container. The present system is designed to be mounted to a mobile structure, and may be folded and collapsed, lowered onto the mobile structure, and then transported to the next jobsite.

The present system is designed to be mobile and be mounted directly to a trailer, flat-bed truck, or moveable platform. Rather than be disassembled once the work is complete, the current system may be folded together and lowered so that it is quickly ready for transport to the next job. The folding design also makes setup and commissioning a faster process. No foundation is required as is for the stationary unit, which reduces deployment time and costs. An added advantage is that the mobile system may consist of two or more lances as opposed to one as is known in the art. Having two lances doubles the throughput and increases the reliability of the overall system. If one lance should fail, the second lance can continue to operate.

Details of the design and operation of the lance (401), valve (124), fluid line (122), injection nozzle (112), actuator (407) and electronic controller (118), at least, are all as described in US 8,708,547, the relevant part which is incorporated herein by reference.

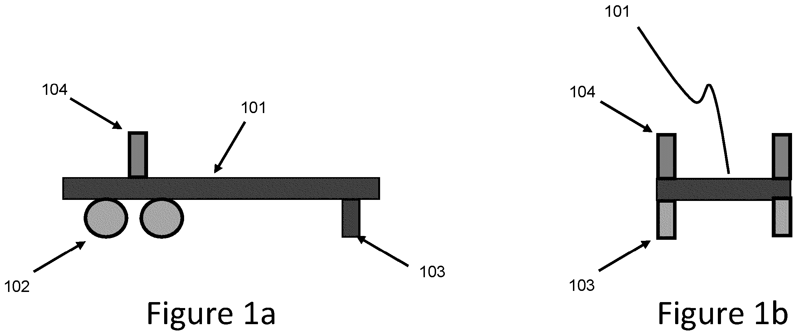

Turning to Figure 1a (side view) and Figure 1b (front view), the basic layout of a trailer that is suitable for use with the present invention is provided. In one embodiment, mounting bed **101** may be a mobile platform with or without wheels (not shown). This basic layout includes, at least, mounting bed **101**, wheels **102**, ground support member **103**, and arm support base **104.** Ground support member **103**, or a functional equivalent, will support the front end of the trailer once detached from the truck, and allow mounting bed **101** to be appropriately leveled. Arm support base **104** will attach to arm assembly **208**, as discussed below.

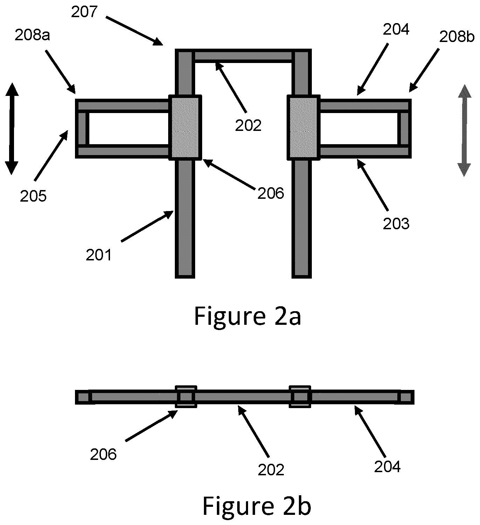

Turning to Figure 2a (front view) and Figure 2b (top view), one non-limiting example of the basic layout of arm support assembly **207** and **208,** in accordance with one embodiment of the present invention are provided. It will be recognized by one of ordinary skill in the art that other arm designs and configurations are also possible, that will work with the present invention. This basic layout includes, at least, two arm support members **201**, crossbeam member **202**, lower arm crossbeam member **203**, upper arm crossbeam member **204**, and arm vertical support member **205.**

Collectively, arm support members **201** and crossbeam member **202** form arm support assembly **207.** Collectively, lower arm crossbeam member **203**, upper arm crossbeam member **204**, and arm vertical support member **205** form arm assembly **208.** Connecting each arm assembly **208** to arm support assembly **207** are arm hinging mechanisms **206.** As will be described below, arm hinging mechanism **206** allows arm assemblies **207** to be moved to different locations along the length of arm support assembly **207.** For purposes of clarity, the "left" arm assembly in the figures is designated **208a,** and the "right" arm assembly is designated **208b.**

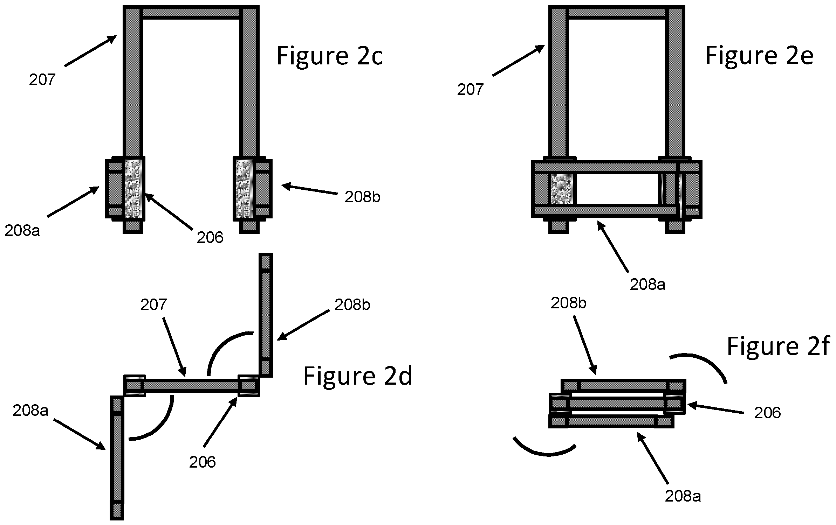

Turning to Figure 2c (front view), Figure 2d (top view), Figure 2e (front view), and Figure 2f (top view), one aspect of the basic folding process of arm assemblies **208,** in accordance with one embodiment of the present invention is provided. Beginning in the fully extended position as shown in Figure 2b. Then, as indicated in Figure 2c and 2d, one arm (for convenience, referenced herein as "left arm" assembly **208a**) may be folded in the direction of one side of arm support assembly **207,** and the other arm (for convenience, referenced herein as the "right arm" assembly **208b**) may be folded in the direction of the other side of arm support assembly **207.** In one embodiment, arms **208a** and **208b** are fully "lowered' prior to folding. As used here, the term "lowered" means brought as close as practical to mounting bed **101.** Ultimately, as indicated in Figure 2e and Figure 2f, both arm assemblies **208a** and **208b** may lie flat and be pinned or fastened against arm support assembly **207.**

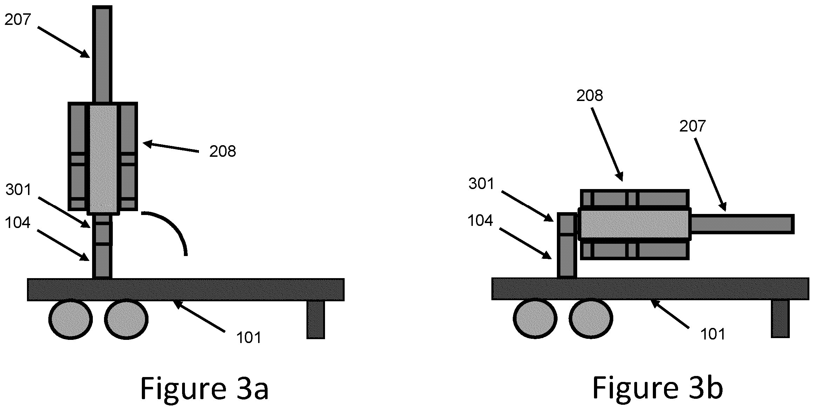

Turning to Figure 3a (side view) and Figure 3b (side view), another aspect of the basic folding process of arm assemblies **208,** in accordance with one embodiment of the present invention is provided. The erect folded assembly of two arm assemblies **208** and arm support assembly **207** described above is illustrated in Figure 3a. Assembly hinging mechanism **301** connects arm support base **104** to arm support assembly **207,** thereby allowing the two members to rotate relative to one another. As illustrated in Figure 3b, the arm / support assembly may be folded in the direction of mounting bed **101,** thereby positioning the assembly for transport to another location.

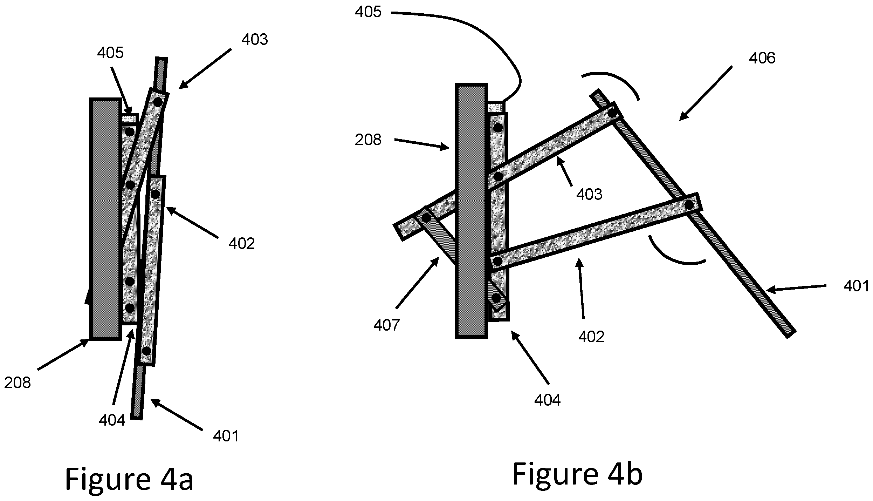

Turning to Figure 4a (side view) and Figure 4b (side view), one aspect of the lance deployment process, in accordance with one embodiment of the present invention is provided. The fully folded, undeployed, transport ready mode is shown in Figure 4a. In this mode, lance **401** is tucked into lower guide member **402** and upper lifting member **403,** which are nestled against arm assembly **207.**

The deployed mode is shown in Figure 4b. In this mode, an actuator **407** (now shown) rotates upper lifting member **403** away from arm assembly **208** as shown, pivoting on lance mast **404.** Lower guide member **402** and upper lifting member **403** are rotatably attached to lance mast **404,** as well as being rotatably attached to lance **401.** As upper lifting member **403** rotates down, lance **401** pivots down and outward and into delivery position. Collectively, lance assembly actuator **407,** lance **401,** lower guide member **402,** upper lifting member **403,** lance mast **404,** and ball joint / breakaway mechanism **405** form lance assembly **406.**

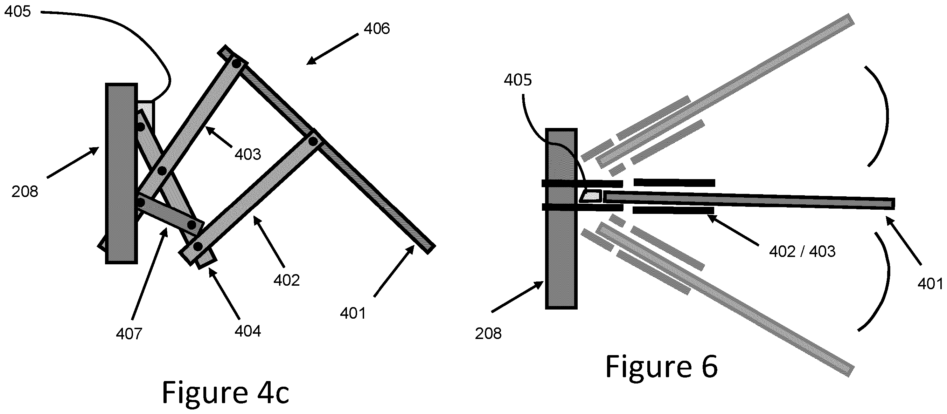

Breakaway devices for such a lance are known in the art. However, typical systems function in only one direction (typically more-or-less in line with the center axis of the lance as depicted in Figure 4c. This allows the concrete mixing truck to pull away with the lance still inserted in the mixing drum. This breakaway helps prevent damage to the unit or drum and reduces the time it takes to get the unit operational again after a pull away event. Ball joint **405** in the present lance design expands on this feature by allowing the breakaway to occur perpendicularly as well as depicted in Figure 6. Perpendicular collisions can occur when the lance is not centered in the truck's hopper and the drum's baffles strike it as the drum revolves.

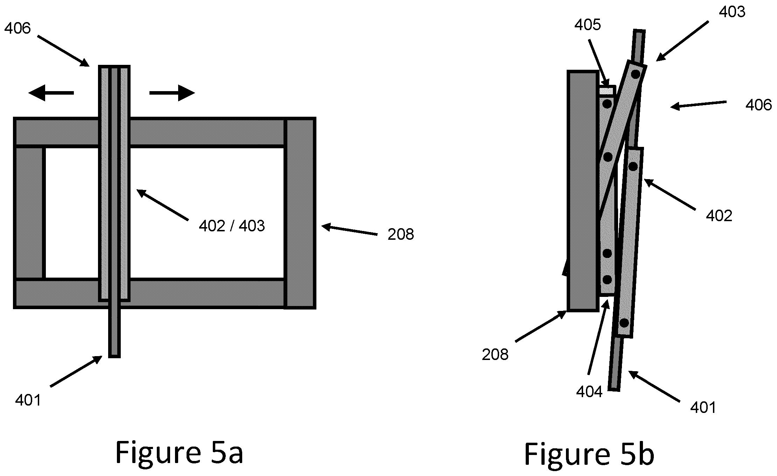

Turning to Figure 5a (front view) and Figure 5b (side view), another aspect of the lance deployment process, in accordance with one embodiment of the present invention is provided. While Figure 5b shows lance assembly **406** undeployed, the movement illustrated in Figure 5a also applies to lance assembly **406** when deployed. Lance assembly 406 may move laterally, as shown, on arm assembly **208** by means of an actuator (not shown) via track wheels, slide bearings, and/or telescoping cross beams (**203** and **204**). This, along with the angle of deployment as indicated in Figure 4b, allows the operator to properly position lance **401** for entry into the cement mixer (not shown).

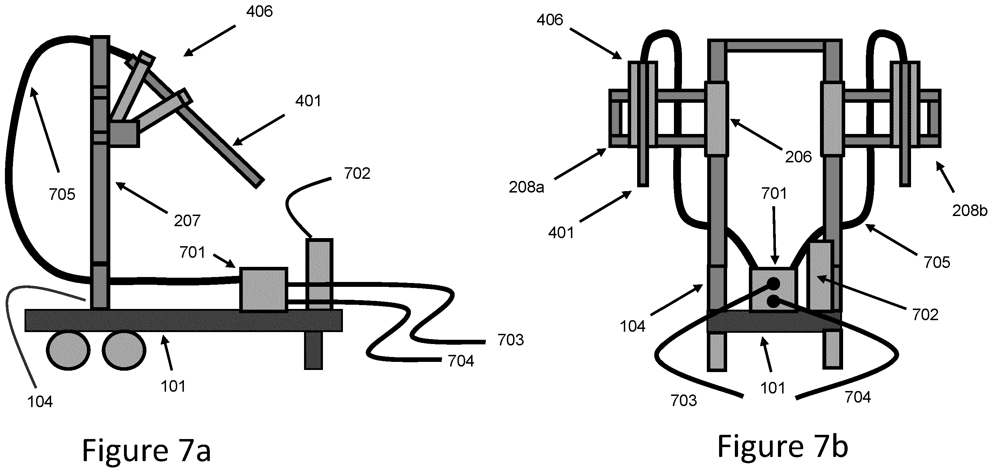

Turning to Figure 7a (side view) and Figure 7b (front view), the complete basic deployed system, in accordance with one embodiment of the present invention is provided. Arm support assembly **207** is pivotally attached to arm support base **104** of mounting bed **101.** Arm assemblies **208a** and **208b** are movably attached to arm support assembly **207.** Lance assemblies **406** are movably attached to arm assemblies **208.** Diverter valve **701,** and control cabinet (with PLC and battery) **702** are attached to mounting bed **101.** Fluid lines **705** connect diverter valves **701** to lance assemblies **406.** Feed hose **703** and return hose **704** attach to diverter valve **701.**

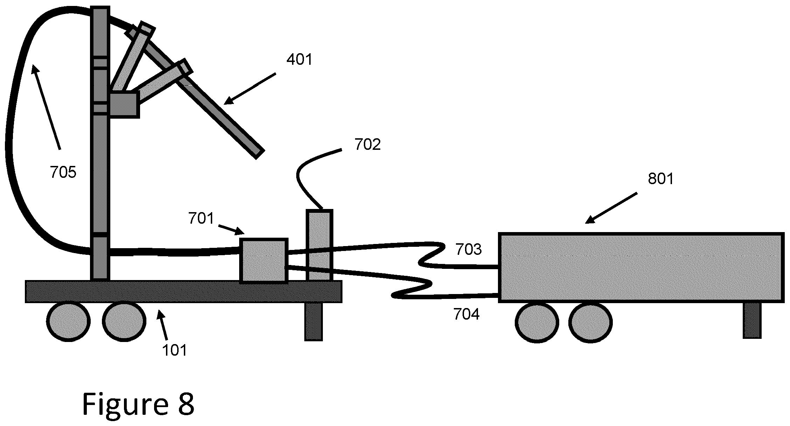

Turning to Figure 8 (side view), the assembly described in Figure 7a and Figure 7b is shown attached to mobile liquid nitrogen supply **801.** Feed hose **703** and return hose **704** attach to mobile liquid nitrogen supply **801,** thereby providing liquid nitrogen to the injection assembly. Mobile liquid nitrogen supply **801** may be a bulk liquid nitrogen transport truck as is known in the art.

The present system may be configured to operate with powered actuators as controlled by a PLC and an operator pendant, or with a rope-pulley system (not shown) under manual operation. For a manual setup, ropes and pulleys can move the lance mechanism left or right to center the lance to the truck's drum, and additional pulleys can control the insertion and retraction of the lance. Manual valves would control the flow of nitrogen. The manual setup allows the unit to continue operating in case of failure of the electronic components. The present system, when electronically controlled, is powered by one or more batteries, which need infrequent recharging. This increases the reliability of the system and allows the unit to operate during power outages without a generator.

In a typical stationary system as known in the art, liquid nitrogen is supplied from a permanent bulk installation, which requires a significant investment and time to set up. The present system is equipped with a diverter valve which allows a safe, direct connection with a liquid nitrogen (LIN) transport, so no bulk installation is needed. When the unit is electronically controlled, the LIN transport can operate unattended and prevent the deadheading and cavitation of the transport's pump, which can cause premature wear or damage to the pump or valves and stop the flow of nitrogen. Deadheading occurs when the process valve(s) close while the pump is still running. The present system's diverter valve will divert the liquid nitrogen back to the transport via return hose **704** (through its fill connection) in the case the process valves close.

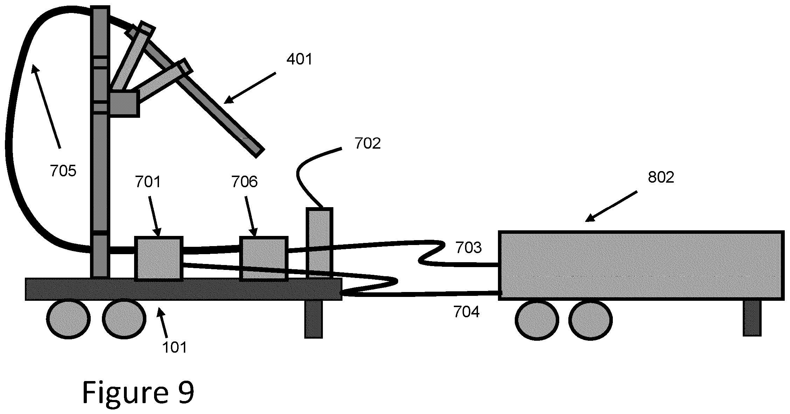

In Figure 9 the assembly includes a separate pump **706** attached to mounting bed **101** or on its own dedicated skid or trailer to be used with LIN transports or portable tanks not equipped with a pump of their own.

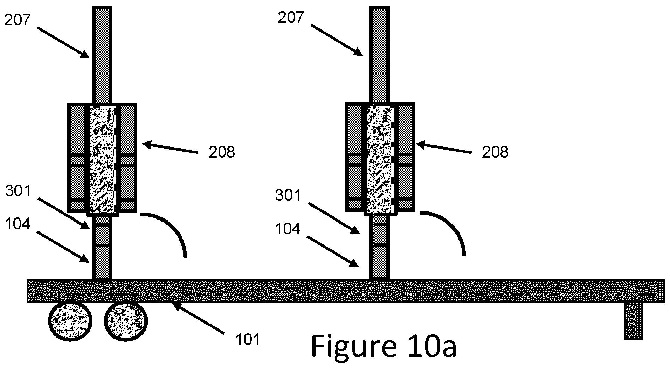

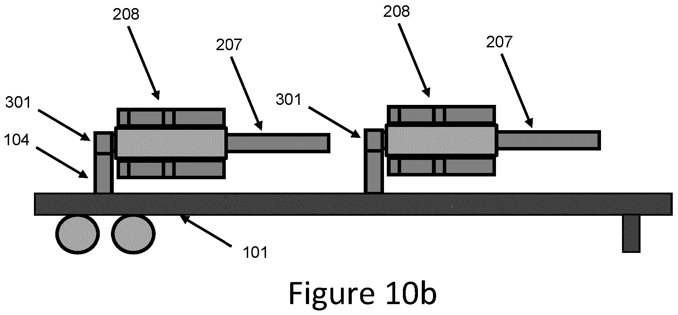

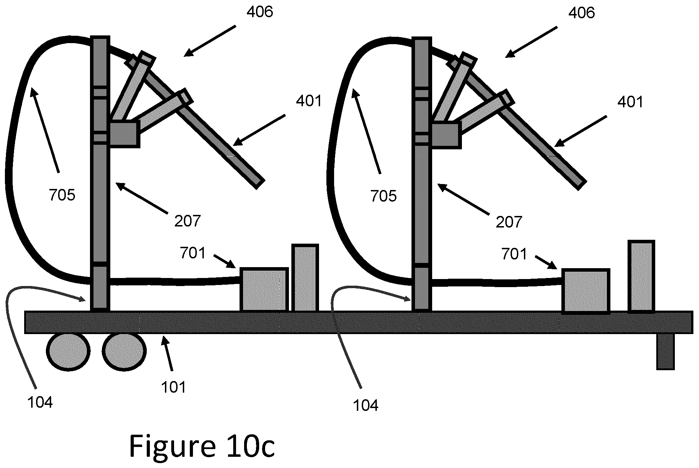

In Figures 10a, 10b, and 10c, one non-limiting example of a system having two lances on a single mounting bed **101** is presented. The skilled artisan will recognize that other configurations are also possible.

It will be understood that many additional changes in the details, materials, steps and arrangement of parts, which have been herein described in order to explain the nature of the invention, may be made by those skilled in the art within the principle and scope of the invention as expressed in the appended claims. Thus, the present invention is not intended to be limited to the specific embodiments in the examples given above.

## Claims

1. An apparatus for cooling a concrete mixture, comprising:
• a mobile base,
• an arm support assembly (207),
• an arm assembly (208, 208a, 208b),
• a lance (401) assembly,
wherein :
- the arm support assembly (207) is pivotally attached to the mobile base,
- the arm support assembly (207) is configured to fold against the mobile base for transport,
- the arm assembly (208, 208a, 208b) is configured to move along the arm support assembly (207),
- the arm assembly (208) is configured to fold against the arm support assembly (207) for transport,
- the lance assembly (406) is configured to be inserted into a cement mixer, the lance assembly (406) is configured to move along the arm assembly (208), and the lance assembly (406) is configured to fold against the arm assembly (208) for transport.

2. The apparatus according to claim 1, wherein it further comprises a breakaway device (405) configured to allow the lance assembly (406) to become disengaged from the arm assembly (208) thereby preventing damage to the apparatus or the cement mixer.

3. The apparatus according to claim 1 or 2, wherein it further comprises a feed hose (703), a return hose (703), a diverter valve (701), and a fluid line (705), the feed hose and the return hose being fluidically connected to a liquid nitrogen source and a diverter valve, and the fluid line being fluidically connected to the diverter valve (701) and the lance assembly (406).

4. The apparatus according to claim 3, wherein the liquid nitrogen source is a mobile liquid nitrogen source.

5. The apparatus according to one of the previous claim 1 to 4, wherein it comprises a control cabinet (702).

6. The apparatus according to one of the previous claim 1 to 5, wherein it comprises a battery.

7. A method for cooling a concrete mixture, comprising the steps of :
• providing an apparatus according to one of the previous claim 1 to 6,
• adjusting the apparatus so that the lance (401) is positioned to enter the opening of a cement truck,
• positioning the cement truck, having disposed therein a cement mixture that is to be mixed and poured, proximate to the apparatus,
• inserting the lance (401) into the opening of the cement truck, and
• introducing liquid nitrogen into the concrete mixer and thereby mixing with the cement mixture.
wherein the apparatus is independent of the cement truck.

8. The method according to claim 7, wherein the liquid nitrogen is obtained from a liquid nitrogen from a mobile liquid nitrogen source.

9. The method according to one of the previous claim 7 to 8, wherein the positioning, inserting, and introducing of liquid nitrogen into the cement mixer are all performed manually.

10. The method according to one of the previous claim 7 to 9, wherein the positioning, inserting, and introducing of liquid nitrogen into the cement mixer are all controlled by a control cabinet (702).

11. The method according to claim 9, wherein power required is provided by a battery.

12. The method according to claim 10, wherein power required is provided by a battery.

13. The method according to one of the previous claim 7 to 12, wherein the lance (401) comprises a breakaway device.

14. The method according to one of the previous claim 7 to 13, wherein the lance assembly (406), the arm assemblies (208, 203, 204, 205), and the arm support assembly (207) are folded during transport.
